# EUROPEAN PATENT APPLICATION

(11) **EP 2 311 679 A1**
(43) Date of publication of application: **20.04.2011**
(21) Application number: 09425409.1
(22) Date of filing: 15.10.2009
(51) Int. Cl.: B60J 7/22

(54) **Motor vehicle having a sunroof provided with a wind deflector device**

(71) Applicant: Fiat Group Automobiles S.p.A., 10135 Torino (TO) (IT)
(72) Inventor: Capizzi, Salvatore, 10135 Torino (IT)
(74) Representative: Lovino, Paolo

(57) **Abstract**

The roof of a motor vehicle (1) can be opened and has a wind deflector device (19), which is provided with a deflector (22) that is movable between a raised active position and a lowered inactive position, and with elastic elements that exert an action to raise the deflector into the active position; the wind deflector device has a closing element (33) which is movable between a locking position, in which it holds the deflector (22) in the inactive position against the action of the elastic elements even when the roof (5) is open, and a release position, in which it allows the deflector (22) to move freely between the inactive and active positions; the wind deflector device has a control element (32), which can be operated manually to move the closing element (33) between the locking and release positions and is arranged in the passenger compartment of the vehicle.

## Description

The present invention relates to a motor vehicle having a sunroof provided with a wind deflector device.

As is known, in motor vehicles with a sunroof, the roof comprises a panel, which is movable longitudinally between a forward position and a retracted position, to close/open an aperture in the roof. When the roof is open, the flow of air entering the passenger compartment is extremely annoying for the people inside and may become unbearable at high speeds.

To reduce the flow of air entering the passenger compartment, prior art solutions comprise a wind deflector device having a deflector element, for example a shutter element, of the retractable type, arranged along the front transverse edge of the roof.

The deflector element is raised and lowered in response to the retraction and, respectively, advancement of the movable roof panel, so as to move into an active position, in which it protrudes upwards with respect to the roof and, respectively, into an inactive position, in which it is concealed in a seat defined by a cross-member of the roof. A spring is provided to raise the deflector element into its active position, while the movable panel, as it moves forward to close the roof, slides against the wind deflector device so as to push the deflector element down against the action of said spring.

The above described solution falls short of being satisfactory, in that in the active position the maximum height that can be given to the deflector element during the design stage is limited by the trajectory of the movable panel as it moves forward to close the roof. Moreover, with the above described solution the driver is not free to lower the deflector element into the concealed position when the roof is open.

The purpose of the invention is to provide a motor vehicle having a sunroof provided with a wind deflector device, which overcomes the problems described above in a simple and inexpensive manner and allows the driver to define, when the roof is still closed, whether the deflector element should be raised into the active position or remain in the inactive position when the roof is opened.

According to the present invention there is provided a motor vehicle having a sunroof provided with a wind deflector device, as defined in claim 1.

In order to better understand the present invention, a non-limiting preferred embodiment thereof will now be described by way of example with reference to the accompanying drawings, in which:
- figure 1 illustrates, from the inside of the passenger compartment, a preferred embodiment of the motor vehicle according to the present invention, with the roof open and with a wind deflector device in a raised active position;
- figure 2 is a longitudinal cross-section, with some parts removed for the sake of clarity, of the motor vehicle of figure 1; and
- figure 3 is similar to figure 2 and shows the wind deflector device in a lowered inactive position.

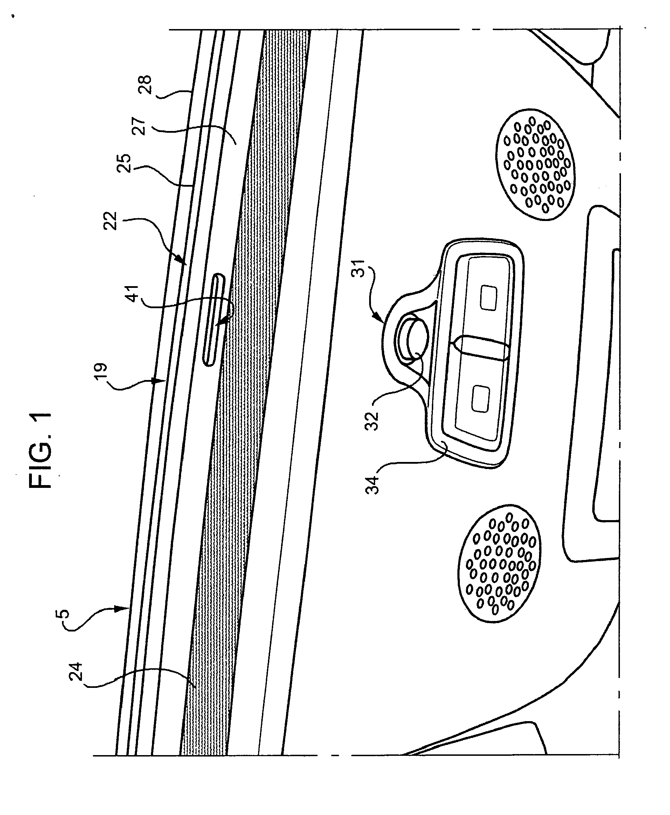

In figure 1, designated as a whole by number 1 is a motor vehicle, in particular an automobile, comprising a sunroof 5, which defines the top of the passenger compartment.

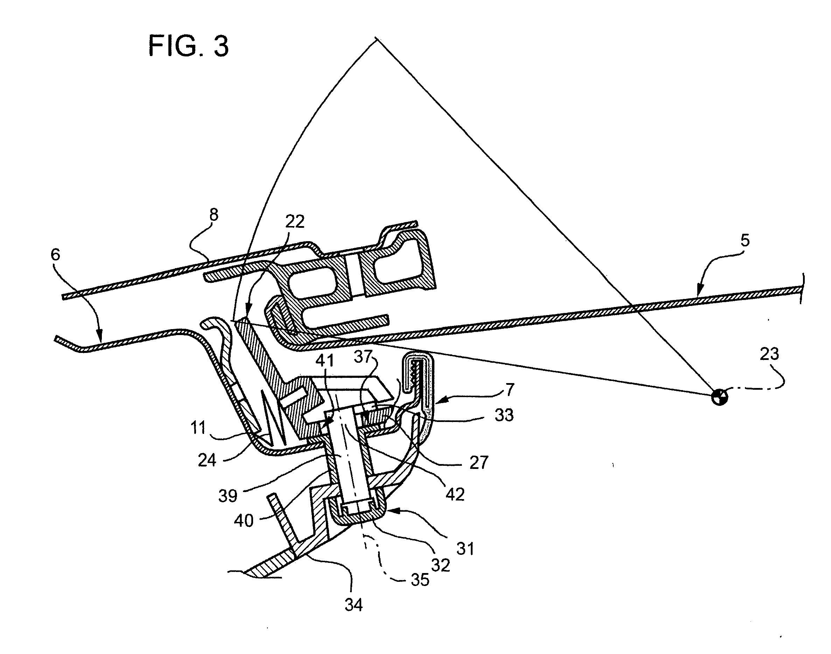

With reference to figure 3, the roof 5 comprises a frame 6 (partially illustrated), which defines an aperture 7 that is opened/closed by a panel 8 (partially illustrated). The panel 8 is movable longitudinally between a forward position (figure 3) in which it closes the aperture 7 in a watertight manner, and a retracted position (not illustrated) in which the roof 5 is open.

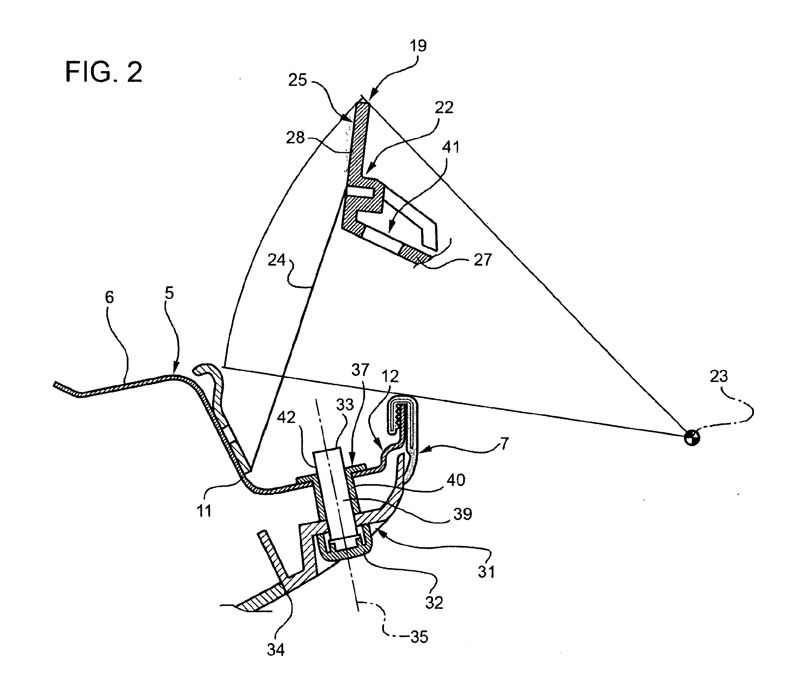

The frame 6 comprises a front cross-member 11, which is arranged along the upper transverse edge of the windscreen (not illustrated) and defines the front transverse edge of the aperture 7. The front cross-member 11 is shaped so as to have an upper seat 12 (figure 2), which extends substantially for the entire width of the aperture 7 and is covered in a watertight manner by the panel 8 when the aperture 7 is closed.

The roof 5 comprises a wind deflector device 19 (partially illustrated), which comprises a retractable deflector 22 that is movable between an inactive position (figure 3), in which it is housed in the seat 12, and an active position (figures 1 and 2), in which it protrudes upwards with respect to the front cross-member 11. The deflector 22 is pushed upwards by the pre-load of elastic elements which are not illustrated. In the particular embodiment that is illustrated, the wind deflector device 19 comprises a lever or hinge mechanism (not illustrated) making the deflector 22 pivotable between the active and inactive positions with respect to the frame 6 about a horizontal transverse axis 23. Alternatively, the deflector may be guided so as to slide between the active and inactive positions.

The deflector 22 comprises a shutter 24 provided with small holes and a support 25, which is rigid, is elongated in a transverse direction substantially for the entire width of the aperture 7, defines the upper edge of the deflector 22, and is coupled to the frame 6 by means of said lever (or hinge) mechanisms. The support 25 has an L-shaped cross-section, and comprises a substantially horizontal wall 27 facing the rear area of the roof 5 and a substantially vertical wall 28, which protrudes upwards from the front edge of the wall 27. The upper and lower extremities of the shutter 24 are fixed, respectively, to the wall 28 and to the front cross-member 11, so that the shutter 24 is folded in the seat 12, in front of the support 25, when the deflector 22 is arranged in the inactive position.

According to the invention, the wind deflector device 19 comprises a releasable locking mechanism 31, which holds the deflector 22 in the inactive position against the action of the elastic elements even when the roof 5 is open.

The mechanism 31 comprises a control element 32 and a closing element 33, which is movable in response to the manual operation of the control element 32 between a locking position, in which it holds the deflector 22 in the inactive position, and a release position, in which it allows the deflector 22 to move freely up into the active position under the action of the elastic elements.

The control element 32 is arranged in the passenger compartment of the vehicle 1. In particular, the closing element 33 is carried by the front cross-member 11, and the control element 32 is carried by a roof lamp 34 or by a roof portion, arranged in the passenger compartment and covering the lower part of the front cross-member 11.

According to the illustrated preferred embodiment, the control element 32 is defined by a knob, while the closing element 33 is defined by a latch that is rotatable about an axis 35 between a locking position and a release position. The latch 33 is axially spaced from a fixed lower surface 37 by a distance substantially equal to the thickness of the wall 27, so as to hold the wall 27 against the surface 37 when arranged in the locking position.

The axis 35 coincides with the axis of the knob 32. The closing and control elements 33,32 are connected to one another by means of an axial rod 39, which is cylindrical, is pivotally coupled to the front cross-member 11 via the interposition of a bushing 40 and comprises a portion 42 that passes through a slot 41 in the wall 27 when the latch 33 locks the deflector 22.

When arranged in the release position, the latch 33 is aligned with the slot 41, considering the trajectory of the deflector 22. Thus, the wall 27 can pass freely beyond the latch 33, in both directions of movement.

Therefore, to allow the deflector 22 to rise up into the active position, the knob 32 simply has to be turned to place the latch in the release position. The elastic elements described above will act so that the deflector 22 is raised if the roof 5 is open.

The deflector 22 can be brought back into the inactive position in two ways. In particular, this can be done simply by closing the aperture 7 with the panel 8, which pushes the support 25 downwards as it moves towards the front cross-member 11. Alternatively, with the roof open 5, the support 25 can be lowered manually and, holding it in the seat 12 with the wall 27 against the surface 37, the knob 32 is turned so as to move the latch 33 into the locking position.

The advantages of the wind deflector device 19 according to the invention over the prior art solutions are apparent from the above description.

Firstly, keeping the deflector 22 in the inactive position even with the roof 5 open eliminates the noise of the wind deflector device 19 at reduced speeds. Moreover, the driver can operate the mechanism 31 not only when the roof 5 is open, but also when the roof 5 is closed, to prevent the deflector 22 from being raised when the roof 5 will open, as the control element 32 is inside the passenger compartment.

Locking/releasing the deflector 22 is a simple operation, as the control element is defined by a rotatable knob 32. Moreover, given the arrangement of the components of the mechanism 31 a compact and inexpensive wind deflector device 19 is obtained. The machining and assembly processes to be performed on the front cross-member 11 are also relatively simple and inexpensive.

Lastly, it is clear that modifications and variations may be made to the motor vehicle 1 described and illustrated herein without departing from the scope of the present invention, as set forth in the appended claims.

In particular, the control element 32 could be defined by a button or by a sliding cursor, and/or the closing element 33 could be defined by a sliding latch or by a snap-on hooking element.

## Claims

1. Motor vehicle (1) comprising a roof (5), which comprises:
- a movable panel (8) for opening/closing the roof (5), and
- a wind deflector device (19);
the wind deflector device comprising:
- a deflector (22) which is movable between a raised active position and a lowered inactive position, and
- elastic means that exert an action to raise said deflector into the active position;
the motor vehicle being **characterized in that** said wind deflector device also comprises:
- a closing element (33) which is movable between a locking position, in which it holds said deflector (22) in the inactive position against the action of said elastic means even when the roof (5) is open, and a release position, in which it leaves said deflector (22) free to move between said inactive and active positions, and
- a control element (32) that can be operated manually to move said closing element (33) between the locking and release positions;
said control element 832) being arranged in the passenger compartment of the vehicle.

2. Motor vehicle according to claim 1, **characterized in that** said roof (5) comprises a front cross-member (11), and **in that** said closing element (33) is carried by said front cross-member (11).

3. Motor vehicle according to claim 2, **characterized in that** said control element (32) is carried by a roof lamp (34) or by a roof portion, arranged in the passenger compartment and covering the lower part of said front cross-member (11).

4. Motor vehicle according to any one of the preceding claims, **characterized in that** said control element (32) is defined by a knob.

5. Motor vehicle according to claim 4, **characterized in that** said closing element (33) is defined by a latch, which is rotatable about an axis (35) and is axially spaced from a fixed surface (37) by a distance substantially equal to the thickness of a wall (27) of said deflector (11), so as to hold said wall (27) when it is arranged in the locking position.

6. Motor vehicle according to claim 5, **characterized in that** the axis (35) of rotation of said latch (33) coincides with that of said knob (32).

7. Motor vehicle according to any one of the preceding claims, **characterized in that** said closing and control elements (33,32) are connected to one another by means of a coupling portion (39); and **in that** said deflector (22) has a hole (41), through which one end (40) of said coupling portion (39) passes when said closing element (33) locks said deflector (22) in the inactive position.
